# EUROPEAN PATENT SPECIFICATION

(11) **EP 1 563 401 B1**
(45) Date of publication and mention of the grant of the patent: **22.11.2006**
(21) Application number: 03810543.3
(22) Date of filing: 08.10.2003
(51) Int. Cl.: G06F 15/167, G06F 15/173, G06F 5/06, G06F 13/40

(54) **DATA PROCESSING APPARATUS WITH ADDRESS REDIRECTION IN RESPONSE TO PERIODIC ADDRESS PATTERNS**
DATENVERARBEITUNGSVORRICHTUNG MIT ADRESSENUMLENKUNG ALS REAKTION AUF PERIODISCHE ADRESSENMUSTER
APPAREIL DE TRAITEMENT DE DONNEES AVEC REACHEMINEMENT D'ADRESSE EN REPONSE A DES MODELES D'ADRESSES PERIODIQUES

(30) Priority: 05.11.2002 EP 02079612
(43) Date of publication of application: 17.08.2005
(73) Proprietor: Koninklijke Philips Electronics N.V., 5621 BA Eindhoven (NL)
(72) Inventor: THOMAS, Bijo, NL-5656 AA Eindhoven (NL)
(74) Representative: Eleveld, Koop Jan
(86) International application number: PCT/IB2003/004427
(87) International publication number: WO 2004/042591

(56) References cited:
- EP-A- 0 483 970
- US-A- 5 968 153
- US-A- 6 018 620

## Description

The invention relates to a data processing apparatus and to a method of data processing.

From US patent No. 4,956,768 a data processing apparatus is known that provides for double buffering of data transferred between a processor and a plurality of outlets. Each outlet is provided with a pair of memories. The processor alternately writes to a first one of the memories and to a second one of the memories. When the processor writes to one memory the other memory is coupled to the outlet. Thus, writing from the processor and output to the outlet can proceed in parallel.

A processor associated with the outlet controls which of the memories is connected to the processor and which is connected to the outlet. US patent No. 4,956,768 does not describe how locations within the memories are addressed and under what conditions the role of the memories is switched.

US-A-5968153 discloses a double buffer unit and a ownership logic coupled to a PCI controller and a memory controller, said ownership logic being used to determine the ownership of each buffer. When one buffer is filled with read data from a PCI controller, ownership of that buffer is exchanged so that a memory controller can empty it while the other buffer is being filled.

Conventionally double buffering is used to provide decoupling between devices that produce and consume data from a data stream, respectively. A writing device alternately addresses one memory and another to write blocks of data. The reading device reads the block by addressing the memory that is not being addressed for writing. Usually, moreover, some form of signaling is required between the devices to indicate when the writing device switches from one block to another.

Amongst others, it is an object of the invention to provide for a form of double buffering communication between different data processing units in which double buffering is supported transparently for the data processing units.

The invention provides for a data processing apparatus according to Claim 1 and a data processing method according to claim 11. According to the invention an independent switching unit controls which memory unit is connected to which data processing unit. Addresses from the data processing units are used to address locations in a memory unit selected by the switching unit, so that a given address may address a location in different ones of the memory units at different times during execution of the same program, depending on the selection by the switching unit. The independent switching unit monitors the addresses supplied by at least one of the data processing units to detect repetitions in the pattern of addresses supplied by the processing unit. Upon detection of a repetition the switching unit switches the selection of the memory unit that is connected to the data processing unit.

Preferably, the criterion for detecting the repetitions is programmable, using for example detection of a repetition of addresses in a programmable range, or a programmable number of repetition, or a programmable combination of repetition of addresses from different ones of the processing units (e.g. alternating after detection of repetitions from both processing units, or alternating for each particular processing unit when a repetition is detected in the address pattern of that particular processing unit, optionally conditional on detection of a repetition by another processing unit after a preceding alternation of the address mapping from the particular one of the processing units.)

Various methods of detecting repetitions may be used, such as after detection of a repetition of an address received from a processing unit, or detection of a certain number of access operations within a certain range, or detection after use of all addresses in a certain range.

In general, the data processing apparatus will contain further memory units whose connections are not switched by the switching unit. Thus, only a subset of the range of addresses that a data processing unit may use to address memory addresses locations in the memory units that are connected via the switching unit. While the addresses in that subset are mapped alternately to different memory units, the remaining addresses are generally mapped to the same memory units. The switching unit preferably only monitors for repetition of addresses in the subset of addresses that address locations in the memory units that are connected to the data processing units via the switching unit. Thus, the alternations between different memory units are not directly dependent on patterns of addressing outside the memory units that are connected via the switching unit.

At least two data processing units and at least two memory units may be connected via the switching unit. However, the invention is easily scalable. Without deviating from the scope of the invention a greater number than two data processing unit and/or memory units may be connected, so that an address from a data processing unit can be mapped to any one of three or more memory units. In this case the switching unit may alternately connect three or more memory units to a data processing unit in a round-robin fashion. Alternatively, the switching unit may be programmable so as to select which subset of the memory units is connected alternately to a specific data processing unit. Thus the data processing apparatus can be configured to provide flexible multiple buffered communication of more than one stream of data between more than two data processing units.

These and other objects and advantageous aspects of the data processing apparatus according to the invention will be described with reference to the following figures:
Fig. 1 shows a data processing apparatus,
Fig. 2 shows an embodiment of a switching control unit,
Fig. 3 shows a further embodiment of a switching control unit,

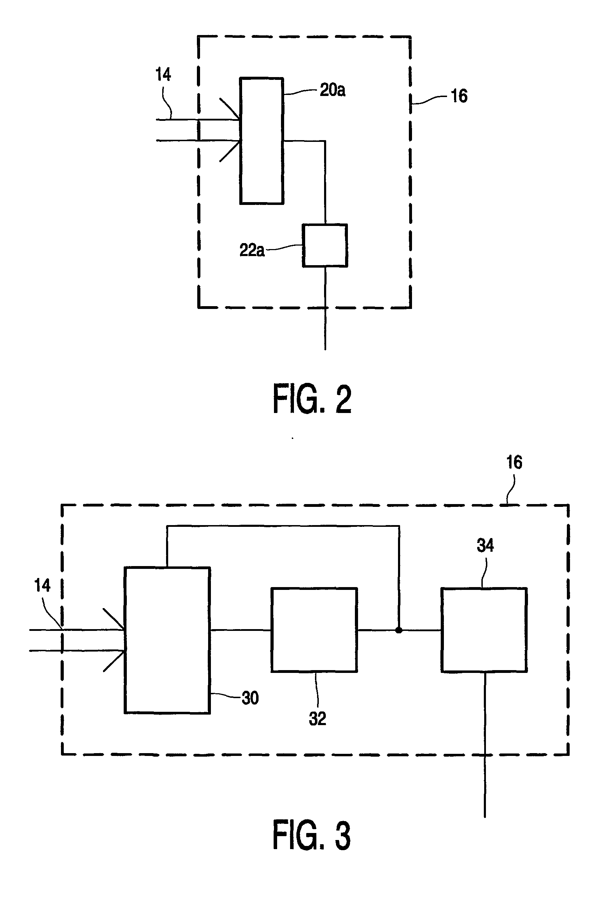

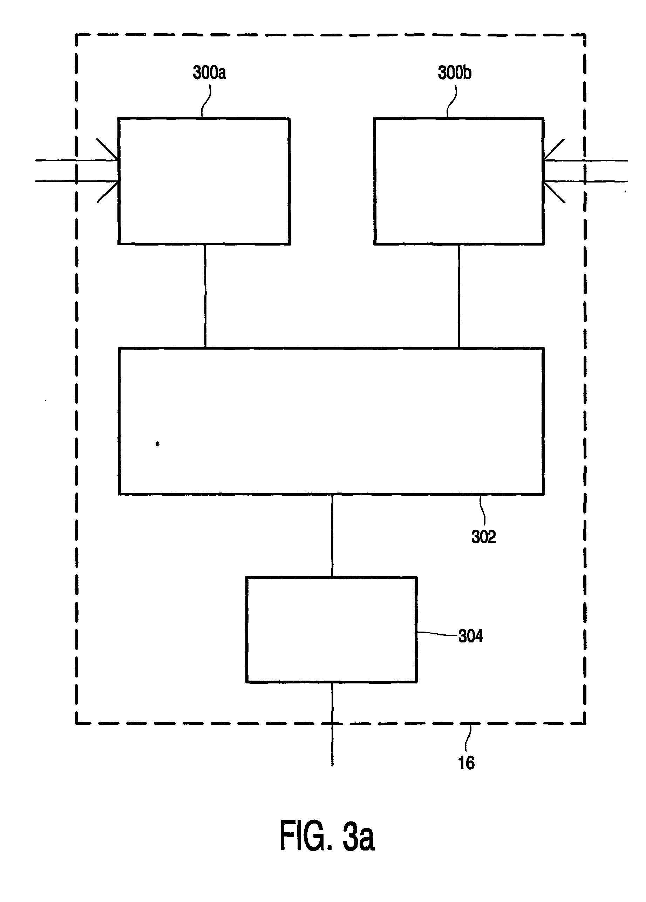

Fig. 3 a shows another embodiment of a switching control unit, and

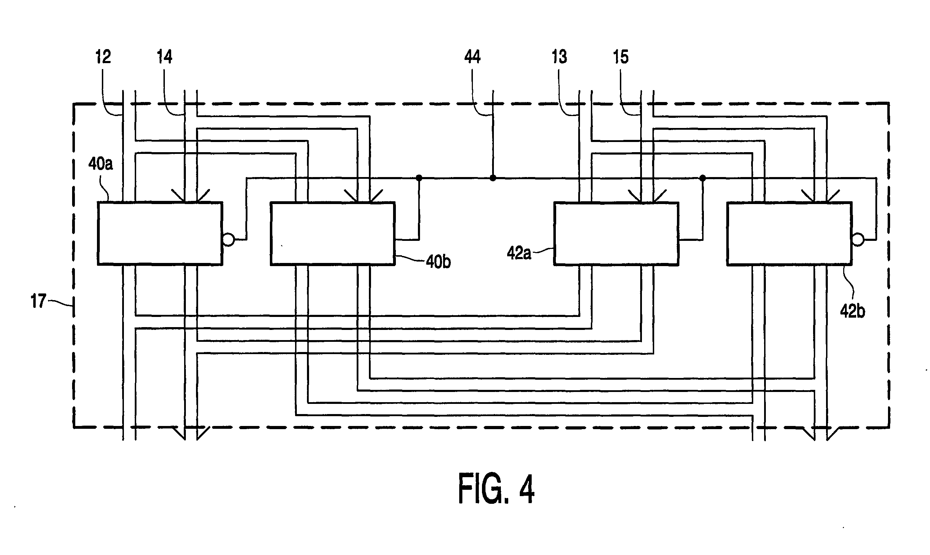

Fig. 4 shows a switching unit

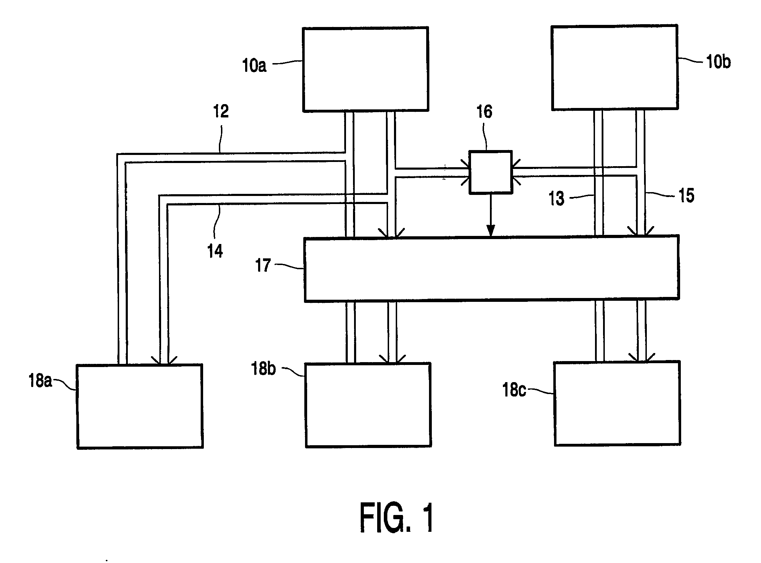

Fig. 1 shows a data processing apparatus. The apparatus comprises processing units 10a,b, a plurality of memory units 18a-c, a switching unit 17 and a switching control unit 16. Each data processing unit 10a,b has connections to a respective address/control bus 14, 15 and a respective data bus 12, 13. The address bus 12 and the data bus 14 of a first processing unit 10a are shown coupled to a first port of the switching unit 17 and a first one of the memory units 18a. The address/control bus 13 and the data bus 15 of a second processing unit 10a are shown coupled to a second port of the switching unit 17. Furthermore, the address/control busses 14, 15 of the first and the second processing unit 10a,b are coupled to the switching control unit 16. The switching control unit 16 has a control output coupled to the switching unit 17. The switching unit 17 has third and fourth ports with connections for address/control and data bus lines to a second and a third one of the memory units 18a-c, respectively.

In operation the processing units 10a,b execute programs that include instructions for reading and/or writing data from and to memory locations. The instructions define the addresses of the relevant memory locations. In response to the instructions, the processing units 10a,b supply these addresses to the memory units 18a-c via the address/control busses 14, 15. Dependent on whether the instructions are read or write instructions, the processing units 10a,b also read data via the data busses 12, 13, or write data via the data busses 12, 13, respectively. The memory units 18a-c that contain the location addressed by the addresses return data from the addressed locations to the data busses 12, 13 or store data from these data busses 12, 13 at the addressed locations.

A first and a second one of the memory units 18b,c contain locations that are addressed by the same addresses. Dependent on a control signal from the switching control unit 16, the switching unit 17 passes these addresses selectively either to the first or the second memory unit 18b,c. Similarly, the data corresponding to these addresses is passed to the selected memory unit 18b,c. Thus, dependent on a state of the switching control unit 16, the address from a processing unit 10a,b either addresses a location in the first memory unit 18b or in the second memory unit 18c. When the address from the first processing unit 10a is outside the range of addresses that address locations in the first and second memory units 18b,c, the address may address a third memory unit 18a directly, that is, not via the switching unit 17.

Although only a single directly addressed third memory unit 18a has been shown, it will be understood that a plurality of such directly connected memory units may in fact be present, some coupled to the address/control bus 14 and the data bus 12 of the first processing unit 10a, and others coupled to the address/control bus 15 and the data bus 13 of the second processing unit 10b.

The switching control unit 16 contains a state holding circuit (not shown), such as a status register, that retains state information which determines which of the memory units 18b,c is connected to the address/control bus 14, 15 and the data bus 12,13 of which of the processing units 10a,b. The switching control unit 16 updates this state information in dependence on addresses received from the processing units 10a,b via the address/control busses 14, 15. The switching control unit 16 uses these addresses to detect the start of different periods of a periodic pattern in the addresses. Each time the switching control unit 16 detects the start of a period it updates the state information so that the addresses will subsequently be applied to a different memory unit 18b,c. Various ways of detecting the start of a period may be used.

Fig. 2 shows a first embodiment of the switching control unit 16 in its simplest form, wherein only one signal is generated for controlling the switching unit 17. In this embodiment the switching control unit 16 contains an address comparator 20a coupled to the address/control bus 14. The comparator 20a has an output coupled to a status register 22a which in turn has an output coupled to a control input of the switching unit 17 (not shown). In operation the comparator 20a compares addresses from the address/control bus 14 with a set address. When the set address is detected, the comparator 20a causes the content of the status register 22a to toggle, which in turn causes the switching unit 17 to swap the memory units 18b,c that are coupled to the first and the second processing unit 10a,b respectively.

Another embodiment of the switching control unit 16 has the same structure as shown in Fig. 2, but in this embodiment the comparator 20a is a comparator that signals when the address is anywhere in a range of addresses that address locations in the first or the second memory unit 18b,c (e.g. by making two comparisons, testing for an address lower than an upper boundary address and higher than a lower boundary address, or by using only a more significant part of the address). In this embodiment the unit 22a is a counter that counts the number of times that addresses in the range are addressed, resets and updates a state register that controls the connections made by the switching unit 17 at the start of a new period when a certain number of addresses has been counted. Such a certain number may be a predetermined number, or a programmable number that is set by a program executed by one of the processing units 18b,c. In this embodiment a circuit that generates a memory unit enable signal for the memory units 18b,c (or chip enable if each memory unit 18b,c is made up of a memory chip) may be used as the comparator 20a, which in this case may be used to provide memory unit enable signals to either memory unit 18b,c, depending on the memory unit that has been selected.

Fig. 3 shows a further embodiment of the switching control unit 16. In this embodiment the switching control unit 16 contains a read modify write memory 30, a detector 32 and a toggle flip-flop 34. The address/control bus 14 is coupled to an address input of the read modify write memory and a data output of the read modify write memory 30 is coupled to an input of the detector 32. An output of the detector 32 is coupled to an input of the toggle flip-flop 34, which in turn has an output coupled to the output of the switching control unit 16. This output of the detector 32 is furthermore coupled to a reset input of the read modify write memory 30. The read modify write memory 30 has a respective location for each address value that can be used to address locations in the first and the second memory 18b,c.

In operation this embodiment of the switching control unit 16 detects the start of a new period of addressing by checking for repeated addressing of any address in the first or the second memory unit 18a,b. The read modify write memory 30 keeps information for each address value, indicating whether the address value has been used in a current period. The addresses that address locations in the first or the second memory 18b,c address locations in the read modify write memory 30 as well. Initially, at the start of a period the detector 32 resets the content of the read modify write memory 30. Each time when such an address is received the content of the corresponding location in the read modify write memory 30 is set. The data that was previously stored at that location in the read modify write memory 30 is tested by the detector. If this data has been set, the detector 32 signals a repetition of the period, which causes the data content in the toggle flip-flop 34 to toggle and causes the content of the read modify write memory 30 to be reset. The data content of the toggle flip-flop 34 controls the connection made by the switching unit 17. This embodiment makes it possible to provide a more refined form of period detection, ignoring, for example, when certain addresses are not used in a certain period.

In a further embodiment the detector 32 may be replaced by a counter that counts how many times data read from the read modify write memory 30 indicated that an address is used for the first time in a period. In this embodiment this counter signals a new period (causing switching by the switching unit 17, a reset of the read modify write memory 30 and a new period of the counting process) when a certain count is exceeded. Thus, the switching control unit signals a new period when enough different locations (more than the certain number) have been addressed. The certain number may be predetermined or programmable by the processing units 10a,b, e.g. by means of a register coupled to at least one of the processing units for setting an initial value of the counter. This embodiment makes it possible to realize a more refined period detection, e.g. ignoring repeated access operations with the same address.

Although the embodiments described with reference to the Figs. 2 and 3 so far show detection of the period from addresses on one of the address/control busses 14 it should be understood that any of the address/control busses 14, 15 could be used, or that addresses from a combination of the busses could be used, switching for example, when the start of a new period has been detected in any one or in each of the processing units 10a,b. When the switching unit 17 permits simultaneous connection of more than one processing unit 10a,b to the same memory unit (e.g. in a time-interleaved manner or on a request arbitration basis), the switching control unit 16 may switch the bus connections of the processing units 10a,b independently of one another between the two memory units 18b,c. For this purpose the switching control unit 16 may be provided with two detection circuits, each for example of one of the types discussed in the context of the Figs. 2 or 3, each coupled to a respective data and address bus and each controlling to which memory unit 18b,c that address data bus is connected.

Fig. 3 a shows an example of an embodiment of the switching control unit 16 in which addresses from a combination of busses are used. The embodiment contains a first and a second repetition detection unit 300a,b, a status comparator 302 and a control register 304. Each of the repetition detection units 300a,b may contain an address comparator, or a read-modify write memory with a detector as shown in the Figs. 2 and 3. Outputs of the repetition detection units 300a,b are coupled to the status comparator 302, which in turn has an update output coupled to the control register 304. The control register 304 has a control output coupled to the switching unit 17 (not shown).

In operation the repetition detection units 300a,b detect repetitions in the pattern of addressing from respective ones of the processing units, for example, as described in the context of the Figs. 2 and 3. On detection of a repetition the repetition detection units 300a,b send a signal to the status comparator 302. In a simple embodiment the status comparator 302 keeps status bits which are set when the respective repetitions are set and the status comparator toggles the control register 304 once both status bits have been set, clearing the status bits. In this embodiment access operations from a particular processing unit are preferably suspended once the status bit for that processing unit has been set.

In another embodiment, the status comparator 302 does not delay the update of the control register 304 until status bits have been set for all processing units, but generates, for example, an update to alternate mapping of addresses from each particular processing unit once a repetition occurs in the address pattern from that particular processing unit, unless no alternation of mapping of addresses from another processing unit has occurred since the last alternation of the mapping of the processing unit, in question.

Although only the use of addresses to control switching has been illustrated in order to provide a simple design, it should be understood that in more complex designs other control signals from the address/control bus 14, 15 may be used as well. For example, the switching control unit 16 may be designed so that it uses addresses only when used for reading or only when used for writing. This makes it possible to realize a more refined period detection, e.g. ignoring read operations.

Furthermore, although the simple switching control units shown in the Figs. 2 and 3 have been assumed to detect repetitions in a fixed range of addresses or of a fixed address, as an alternative a programmable range or a programmable address may be used, controlled, for example by using one or more programmable registers in the comparator 20a for defining a detection range, the register being coupled to at least one of the processing units, so that this processing unit can write values in these registers under program control. Similarly, an address range detector may be added to the detector of Fig. 3, so as to detect for each addresses whether it is in a programmed range. When a repetition of an address is detected by means of the read-modify write memory, a repetition is signaled only if the address is in the programmed range. Thus, the criteria for the detection of repetitions of address patterns can be adjusted in dependence on the program used under program control. Similarly, the criteria for detection repetitions from a combination of processing units 10a,b may be program controlled.

Preferably, all the addresses used for the detection of repetitions in the embodiments described with reference to the Figs. 2 and 3 are only addresses in the range of addresses that address memory locations in the memory units 18b,c. However, in a further embodiment addresses outside that range may be used. Thus, it is possible to permit a large variation of access patterns with addresses in the memory units 18b,c that are connected via switching unit 17, while still permitting detection of repetition using the addresses outside the range of addresses of those memory units 18b,c.

Fig. 4 shows an embodiment of the switching unit 17. The embodiment contains selectable address/data bus drivers 40a,b, 42a,b. A first address/data bus driver 40a is connected between the address/control bus 14 and the data bus 12 of the first processing unit 10a (not shown), on the one side and to data/address connections for the first memory unit 18a (not shown) on the other side. A second address/data bus driver 40b is connected between the address/control bus 14 and the data bus 12 of the first processing unit 10a (not shown) on the one side and to data/address connections for the second memory unit 18b (not shown) on the other side. A third address/data bus driver 42a is connected between the address/control bus 15 and the data bus 13 of the second processing unit 10b (not shown) on the one side and to data/address connections for the first memory unit 18a (not shown), on the other side. A fourth address/data bus driver 42b is connected between the address/control bus 15 and the data bus 13 of the second processing unit 10b (not shown), on the one side and to data/address connections for the second memory unit 18b (not shown), on the other side.

The switching unit 17 has an input 44 for a control signal which is coupled to enable inputs of the address/data bus drivers 40a,b, 42a,b, so that either first and fourth address/data bus drivers 40a, 42b are enabled simultaneously or second and third address/data bus drivers 40b, 42a are enabled simultaneously, depending on a control signal from the switch control unit 16 (not shown). When enabled, the address/data bus drivers 40a,b, 42a,b pass data signals and address signals.

Without deviating from the scope of the invention more complex control signals may be used, for example, control signals that allow the first and second address/data bus drivers 40a,b to be controlled independently from the third and fourth address/data bus drivers 42a,b, provided that some, sharing mechanism is provided that permits shared access to the memory units 18a,b (for example a time slot multiplexing mechanism, a priority mechanism or an arbitration mechanism).

The switching unit 17 can easily be expanded to support a greater number of processing units and or memory units. More processing units are supported by adding more address/data bus drivers; more memory units are supported by connecting more address/data bus drivers together. More than two memory units may be used, for example, to map addresses from the processing units 10a,b to different memories in a round-robin fashion. For this purpose, instead of the toggle flip-flops shown in the Figs. 2 and 3 cycling counters may be used for each of the processing units 10a,b so as to select which of the memory units 18a,b are addressed by each of the processing units 10a,b. This makes it more readily possible to switch the mapping of addresses from the individual processing units 10a,b once a repetition has been detected, without causing memory conflicts. Under program control different cycles of the memory units 18a-b may be selected, for example, alternating addressing of some addresses between a first pair of memory units and alternating addressing of other addresses between a second pair of memory units, or cycling mapping of the addresses through three of the memory units.

It will now be appreciated that the apparatus permits a processing unit 10a,b to address locations in respective ones of the memory units 18a,b with the same address. Control of the memory unit in which the location is addressed is exerted by a switching control unit that is external to the processing unit and that selects to switch in dependence on the detection of the start of a repetition of a periodic pattern. Although the same address from any one processing unit 10a,b addresses locations in different memory units 18a,b in dependence on the state of the switching control unit 16, it is not strictly necessary that locations in the memory units 18a,b are addressed by the same addresses from different ones of one processing unit 10a,b. Some address translation mechanism (if only suppression of a more significant part of the address that is not needed to distinguish addresses within the memory units 18a,b) may be included between the processing units 10a,b and the memory units 18a,b so that different addresses address the same locations, in dependence on the processing unit from which the address is supplied.

## Claims

1. A data processing apparatus, comprising:
- a plurality of data processing units (10a-b), each having an address output (14, 15) and a data input and/or output (12, 13);
- a plurality of memory units (18a,b), each having an address input and a data input and/or output;
- a switching unit (16, 17) comprising:
- first selectable connections between the data input and/or outputs (12, 13) of the processing units (10a) and selectable ones of the data input and/or outputs of the memory units (18a,b),
- second selectable connections from the address outputs of the processing units (10b) to the address inputs of selectable ones of the memory units (18a,b),
**characterized in that** said switching unit further comprises:
- a detection unit (20a, 30, 32) coupled to the address outputs of the processing units (10a,b), arranged to detect repetitions of a period of an address pattern output by the at least one of the processing units (10a,b),
- a state holding element (22a, 34) for controlling the first and second selectable connections, the state holding element (22a, 34) having an input coupled to the detection unit (20a, 30, 32), in order to switch the first and second selectable connections in response to the detection of a new one of said repetitions, so that identical addresses from the data processing units (10a,b) alternately map to different ones of the memory units (18a,b) during successive repetitions.

2. A data processing apparatus according to Claim 1, wherein a criterion for detecting the new one of the repetitions is programmable under the control of a program executed by the apparatus.

3. A data processing apparatus according to Claim 1, wherein the detection unit comprises an address comparator (20a) arranged to detect whether addresses from the address output of a first one of the data processing units (10a,b) fall in a range of one or more addresses associated with the memory units (18a,b), and to generate a detection signal indicating the new one of said repetitions each time when one of the addresses from the address output of the first one of the data processing (10a,b) units has output addresses in said range a certain number of times.

4. A data processing apparatus according to Claim 3, wherein said certain number is one, and wherein said range is a subset of one or more of the addresses associated with the memory units (18a,b).

5. A data processing apparatus according to Claim 3, wherein said certain number is greater than one, the apparatus comprising a counter for counting a counted number of the addresses from the address output of the first one of the data processing units in said range at least until said certain number.

6. A data processing apparatus according to Claim 1, wherein the detection unit comprises an access memory (30) for the at least one of the data processing units (10a,b) the access memory (30) comprising locations for a plurality of the addresses that address locations in the memory units (18a,b) that are addressable by the first one of the data processing units (10a,b), the access memory (30) being arranged to record access to the locations in the memory units (18a,b), the detection unit (32) being arranged to generate a detection signal indicating the new repetition in dependence on whether the access memory (30) indicates that an address supplied by the first one of the processing units (10a,b) has been supplied before during the repetition.

7. A data processing apparatus according to Claim 6, wherein the detection unit (32) generates the detection signal when the at least one of the data processing units (10a,b) outputs an address for which the access memory (30) has previously recorded access after a previous detection of said new repetition.

8. A data processing apparatus according to Claim 6, wherein the detection unit (32) generates the detection signal when the at least one of the data processing units (10a,b) has executed more than a certain number of addresses for which the access memory indicates that the address has not been supplied previously during the repetition.

9. A data processing unit according to Claim 1, wherein said plurality of memory units (18a,b) comprises three or more memory units, the state holding element controlling the switching of the first and second selectable connections, so that identical addresses from the data processing units cyclically map to different ones of three or more of the memory units during successive repetitions.

10. A data processing unit according to Claim 1, wherein the detection unit is arranged to perform the detection of repetitions involving repetition of read and/or write control signals from at least one of the processing units (10a,b).

11. A data processing method, the method comprising:
- detecting repetition of periods of access address patterns output from at least one of a plurality of processing units
- switching selectable connections between the data input and/or outputs of the processing units and the data input and/or outputs of selectable ones of a plurality of memory units, so that a same address from at least one of the plurality of processing units alternately addresses a location in different ones of the memory units in dependence on the detection of said repetition.

## Patentansprüche

1. Datenverarbeitungsanordnung, welche die nachfolgenden Elemente umfasst:
- eine Anzahl Datenverarbeitungseinheiten (10a-b), die je einen Adressenausgang (14, 15) und einen Dateneingang und/oder Ausgang (12, 13) haben,
- eine Anzahl Speichereinheiten (18a, b), die je einen Adresseneingang und einen Dateneingang und/oder Ausgang haben,
- eine Umschalteinheit (16, 17), die Folgendes enthält:
- erste selektierbare Verbindungen zwischen dem Dateneingang und/oder Ausgängen (12, 13) der Verarbeitungseinheiten (10a) und selektierbare Verbindungen des Dateneingangs und/oder von Ausgängen der Speichereinheiten (18a, b),
- zweite selektierbare Verbindungen von den Adressenausgängen der Verarbeitungseinheiten (10b) zu den Adresseneingängen selektierbarer Verbindungen der Speichereinheiten (181, b),
**dadurch gekennzeichnet, dass** die genannte Umschalteinheit weiterhin Folgendes umfasst:
- eine Detektionseinheit (20a, 30, 32) die mit den Adressenausgängen der Verarbeitungseinheiten (10a, b) gekoppelt ist, vorgesehen zum Detektieren von Wiederholungen einer Periode eines Adressenmusterausgang durch die wenigstens eine Einheit der Verarbeitungseinheiten (10a, b),
- ein Zustandsfesthalteelement (22a, 34) zur Steuerung der ersten und zweiten selektierbaren Verbindungen, wobei ein Eingang des Zustandsfesthalteelementes (22a, 34) mit der Detektionseinheit (20a, 30, 32) gekoppelt ist, um die ersten und zweiten selektierbaren Verbindungen in Reaktion auf die Detektion einer neuen Wiederholung der genannten Wiederholungen umzuschalten, so dass identische Adressen von den Datenverarbeitungseinheiten (10a,b) während aufeinander folgenden Wiederholungen abwechselnd zu anderen Einheiten der Speichereinheiten (18a, b) übereinstimmen.

2. Datenverarbeitungsanordnung nach Anspruch 1, wobei ein Kriterium zum Detektieren der neuen Wiederholung unter Ansteuerung eines Programms programmierbar ist, das von der Anordnung durchgeführt wird.

3. Datenverarbeitungsanordnung nach Anspruch 1, wobei die Detektionseinheit einen Adressenvergleicher (20a) aufweist, vorgesehen um zu detektieren, ob die Adressen von dem Adressenausgang einer ersten Datenverarbeitungseinheit (10a, b) in einem Bereich einer oder mehrerer Adressen liegen, die mit den Speichereinheiten (18a,b) assoziiert sind, und zum Erzeugen eines Detektionssignals das die neue Wiederholung angibt, und zwar jeweils wenn eine der Adressen von dem Adressenausgang der ersten Datenverarbeitungseinheit (10a,b) eine bestimmte Anzahl Male Adressen in dem genannten Bereich ausgeliefert hat.

4. Datenverarbeitungsanordnung nach Anspruch 3, wobei die genannte bestimmte Anzahl Eins ist, und wobei der genannte Bereich ein Subsatz einer Adresse oder mehrerer Adressen ist, die mit den Speichereinheiten (18a, b) assoziiert sind.

5. Datenverarbeitungsanordnung nach Anspruch 3, wobei die genannte bestimmte Anzahl größer ist als Eins, wobei die Anordnung einen Zähler aufweist zum Zählen einer gezählten Anzahl Adressen von dem Adressenausgang der ersten Verarbeitungseinheit der genannten Verarbeitungseinheiten in dem genannten Bereich, wenigstens bis an die genannte bestimmte Anzahl.

6. Datenverarbeitungsanordnung nach Anspruch 1, wobei die Detektionseinheit einen Zugriffsspeicher (30) aufweist für wenigstens eine der Datenverarbeitungseinheiten (10a,b), wobei der Zugriffsspeicher (30) Stellen aufweist für eine Anzahl Adressen, die Stellen in den Speichereinheiten (18a, b) adressieren, die durch die erste Datenverarbeitungseinheit der Datenverarbeitungseinheiten (10a, b) adressierbar sind, wobei der Zugriffsspeicher (30) dazu vorgesehen ist, Zugriff auf die Stellen in den Speichereinheiten (18a, b) aufzuzeichnen, wobei die Detektionseinheit (32) dazu vorgesehen ist, ein Detektionssignal zu erzeugen, das die neue Wiederholung angibt, und zwar in Abhängigkeit davon, ob der Zugriffspeicher (30) angibt, dass eine Adresse, die von der ersten Verarbeitungseinheit der Verarbeitungseinheiten (10a, b) geliefert worden ist, vorher während der Wiederholung geliefert worden ist.

7. Datenverarbeitungsanordnung nach Anspruch 6, wobei die Detektionseinheit (32) das Detektionssignal erzeugt, wenn die wenigstens eine Verarbeitungseinheit der Datenverarbeitungseinheiten (10a, b) eine Adresse ausliefert, für die der Zugriffsspeicher (30) vorher nach der Detektion der neunen Wiederholung Zugriff aufgezeichnet hat.

8. Datenverarbeitungsanordnung nach Anspruch 6, wobei die Detektionseinheit (32) das Detektionssignal erzeugt, wenn die wenigstens eine Verarbeitungseinheit der Datenverarbeitungseinheiten (10a, b) mehr als eine bestimmte Anzahl Adressen durchgeführt hat, für die der Zugriffsspeicher angibt, dass die Adresse nicht vorher während der Wiederholung geliefert worden ist.

9. Datenverarbeitungsanordnung nach Anspruch 1, wobei die genannte Anzahl Speichereinheiten (18a, b) drei oder mehr Speichereinheiten aufweist, wobei das Zustandsfesthalteelement die Umschaltung der ersten und der zweiten selektierbaren Verbindungen steuert, so dass identische Adressen von den Datenverarbeitungseinheiten zyklisch verschiedene Einheiten der drei oder mehr Speichereinheiten während aufeinander folgenden Wiederholungen abbilden.

10. Datenverarbeitungsanordnung nach Anspruch 1, wobei die Detektionseinheit dazu vorgesehen ist, die Detektion von Wiederholungen durchzuführen, die sich auf die Wiederholung von Lese- und/oder Schreibsteuersignalen von wenigstens einer Einheit der Verarbeitungseinheiten (10a, b) beziehen.

11. Datenverarbeitungsverfahren, wobei dieses Verfahren Folgendes umfasst:
- das Detektieren der Wiederholung von Perioden von Zugriffsadressenmustern, ausgeliefert von wenigstens einer Einheit einer Anzahl Verarbeitungseinheiten,
- das Umschalten selektierbarer Verbindungen zwischen dem Dateneingang und/oder Ausgängen der Verarbeitungseinheiten und dem Dateneingang und/oder Ausgängen selektierbarer Einheiten einer Anzahl Speichereinheiten, so dass eine gleiche Adresse von wenigstens einer Einheit der Anzahl Verarbeitungseinheiten abwechselnd eine Stelle in verschiedenen Einheiten der Speichereinheiten adressieren in Abhängigkeit von der Detektion der genannten Wiederholung.

## Revendications

1. Appareil de traitement de données, comprenant:
- plusieurs unités de traitement de données (10a-b), chacune ayant une sortie d'adresses (14, 15) et une entrée et/ou une sortie de données (12, 13);
- plusieurs unités de mémoire (18a,b), chacune ayant une entrée d'adresses et une entrée et/ou une sortie de données;
- une unité de commutation (16, 17) comprenant:
- des premières connexions sélectionnables entre l'entrée et/ou les sorties de données (12, 13) des unités de traitement (10) et celles qui sont sélectionnables parmi lesdites entrée et/ou sorties de données des unités de mémoire (18a,b),
- des deuxièmes connexions sélectionnables allant des sorties d'adresses des unités de traitement (10b) aux entrées d'adresses de celles qui sont sélectionnables parmi lesdites unités de mémoire (18a,b),
**caractérisé en ce que** ladite unité de commutation comprend de plus:
- une unité de détection (20a, 30, 32) couplée aux sorties d'adresses des unités de traitement (10a,b), aménagée pour détecter des répétitions d'une période d'une sortie de modèle d'adresses par ladite au moins une des unités de traitement (10a,b),
- un élément de maintien d'état (22a, 34) pour commander les première et deuxième connections sélectionnables, l'élément de maintien d'état (22a, 34) ayant une entrée couplée à l'unité de détection (20a, 30, 32), de façon à commuter les première et deuxième connexions sélectionnables en réponse à la détection d'une répétition nouvelle parmi lesdites répétitions, de sorte que des adresses identiques provenant des unités de traitement de données (10a,b) correspondent alternativement à différentes unités parmi lesdites unités de mémoire (18a,b) pendant des répétitions successives.

2. Appareil de traitement de données selon la revendication 1, dans lequel un critère pour la détection de la répétition nouvelle parmi lesdites répétitions est programmable sous la commande d'un programme exécuté par l'appareil.

3. Appareil de traitement de données selon la revendication 1, dans lequel l'unité de détection comprend un comparateur d'adresses (20a) aménagé pour détecter si les adresses provenant de la sortie d'adresses d'une première desdites unités de traitement de données (10a,b) tombe dans un intervalle d'une ou plusieurs adresses associée(s) avec les unités de mémoire (18a,b), et pour générer un signal de détection indiquant la répétition nouvelle parmi lesdites répétitions chaque fois qu'une des adresses de la sortie d'adresses de la première des unités de traitement de données (10a,b) a des adresses de sortie dans ledit intervalle un certain nombre de fois.

4. Appareil de traitement de données selon la revendication 3, dans lequel ledit certain nombre est un, et dans lequel ledit intervalle est un sous-ensemble d'une ou de plusieurs des adresses associées aux unités de mémoire (18a,b).

5. Appareil de traitement de données selon la revendication 3, dans lequel ledit certain nombre est plus grand que un, l'appareil comprenant un compteur pour compter un nombre compté des adresses provenant de la sortie d'adresses de la première des unités de traitement de données dans ledit intervalle au moins jusqu'audit certain nombre.

6. Appareil de traitement de données selon la revendication 1, dans lequel l'unité de détection comprend une mémoire d'accès (30) pour ladite au moins une des unités de traitement de données (10a,b), la mémoire d'accès (30) comprenant des emplacements pour plusieurs des adresses qui adressent des emplacements dans les unités de mémoire (18a,b) qui sont adressables par la première des unités de traitement de données (10), la mémoire d'accès (30) étant aménagée pour enregistrer l'accès aux emplacements dans les unités de mémoire (18a,b), l'unité de détection (32) étant aménagée pour générer un signal de détection indiquant la nouvelle répétition en fonction du fait que la mémoire d'accès (30) indique qu'une adresse procurée par la première des unités de traitement (10a,b) a été fournie oui ou non avant pendant la répétition.

7. Appareil de traitement de données selon la revendication 6, dans lequel l'unité de détection (32) génère le signal de détection quand ladite au moins une des unités de traitement de données (10a,b) sort une adresse pour laquelle la mémoire d'accès (30) a précédemment enregistré un accès après une détection précédente de ladite nouvelle répétition.

8. Appareil de traitement de données selon la revendication 6, dans lequel l'unité de détection (32) génère le signal de détection quand ladite au moins une des unités de traitement de données (10a,b) a exécuté plus qu'un certain nombre d'adresses pour lesquelles la mémoire d'accès indique que l'adresse n'a pas été fournie précédemment pendant la répétition.

9. Unité de traitement de données selon la revendication 1, dans laquelle lesdites plusieurs unités de mémoire (18a,b) comprennent trois unités de mémoire ou plus, l'élément de maintien d'état commandant la commutation des première et deuxième connexions sélectionnables, de sorte que des adresses identiques provenant d'unités de traitement de données correspondent cycliquement à différentes unités parmi lesdites trois unités de mémoire ou plus pendant des répétitions successives.

10. Unité de traitement de données selon la revendication 1, dans laquelle l'unité de détection est aménagée pour réaliser la détection de répétitions impliquant la répétition de signaux de commande de lecture et/ou d'écriture d'au moins une des unités de traitement (10a,b).

11. Procédé de traitement de données, le procédé comprenant:
- la détection de la répétition de périodes de sortie de modèles d'adresses d'accès d'au moins une de plusieurs unités de traitement
- la commutation de connexions sélectionnables entre l'entrée et/ou les sorties de données des unités de traitement et l'entrée et/ou les sorties de données d'unités sélectionnables parmi plusieurs unités de mémoire, de sorte qu'une même adresse provenant d'au moins une desdites plusieurs unités de traitement adresse alternativement un emplacement dans différentes unités parmi lesdites unités de mémoire en fonction de la détection de ladite répétition.
